(19) Europäisches Patentamt / European Patent Office / Office européen des brevets

(11) **EP 1 436 647 B1**

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(21) Anmeldenummer: **02801294.6**

(22) Anmeldetag: **24.09.2002**

(51) Int Cl.:
**G02B 5/18** *(2006.01)*

(86) Internationale Anmeldenummer:
**PCT/EP2002/010669**

(87) Internationale Veröffentlichungsnummer:
**WO 2003/034105 (24.04.2003 Gazette 2003/17)**

(54) **VERFAHREN ZUR HERSTELLUNG EINES MASSSTABES, SOWIE DERART HERGESTELLTER MASSSTAB UND EINE POSITIONSMESSEINRICHTUNG**

METHOD FOR PRODUCING A SCALE, SCALE PRODUCED ACCORDING TO SAID METHOD AND A POSITION MEASURING DEVICE

PROCEDE DE PRODUCTION D'UNE ECHELLE GRADUEE, ECHELLE GRADUEE PRODUITE SELON CE PROCEDE ET DISPOSITIF DE MESURE DE POSITION

(84) Benannte Vertragsstaaten:
**AT BE BG CH CY CZ DE DK EE ES FI FR GB GR IE IT LI LU MC NL PT SE SK TR**

(30) Priorität: **11.10.2001 DE 10150099**

(43) Veröffentlichungstag der Anmeldung:
**14.07.2004 Patentblatt 2004/29**

(73) Patentinhaber: **Dr. Johannes Heidenhain GmbH 83292 Traunreut (DE)**

(72) Erfinder:
• **SPECKBACHER, Peter**
**84558 Kirchweidach (DE)**
• **FLATSCHER, Georg**
**83458 Schneizlreuth (DE)**

(56) Entgegenhaltungen:
US-A- 4 522 862    US-A- 5 377 044
US-A- 5 786 931

• PEUKER M: "Optimum energy for high resolution low voltage electron beam lithography - Monte Carlo simulations and experiments" MICROELECTRONIC ENGINEERING, ELSEVIER PUBLISHERS BV., AMSTERDAM, NL, Bd. 53, Nr. 1-4, Juni 2000 (2000-06), Seiten 337-340, XP004237785 ISSN: 0167-9317

EP 1 436 647 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

-Die Erfindung betrifft ein Verfahren zur Herstellung eines Maßstabes in Form eines Auflicht-Phasengitters für eine lichtelektrische Positionsmesseinrichtung gemäß dem Anspruch 1 sowie einen Maßstab gemäß Anspruch 4 und eine Positionsmesseinrichtung gemäß Anspruch 8.

Ein Auflicht-Phasengitter dient bei einer lichtelektrischen Positionsmesseinrichtung zur Messung der Relativlage zweier zueinander beweglicher Objekte als Maßverkörperung. Das Auflicht-Phasengitter soll eine hohe Beugungseffizienz und damit verbunden einen möglichst hohen Reflexionsgrade der darin befindlichen Reflektorschichten aufweisen, damit in den entsprechenden Positionsmesseinrichtungen das Messsignal im Verhältnis zu den Rauschsignalen möglichst groß ist.

In der EP 0160 784 A2 der Anmelderin ist ein Phasengitter beschrieben, das aus zwei beabstandeten Reflexionsschichten besteht, die zu beiden Seiten einer transparenten Abstandsschicht angeordnet sind, wobei wenigstens eine Reflexionsschicht als Amplitudengitter ausgebildet ist. In einem Ausführungsbeispiel ist dort eine Reflexionsschicht als durchgängige Schicht gezeigt. Als gängige Materialen für die Reflexionsschichten werden in der oben genannten Schrift Chrom und Gold vorgeschlagen.

Das Auflicht-Phasengitter gemäß der EP 0 742 455 A1 der Anmelderin offenbart als Material für die reflektierenden Schichten ebenfalls Chrom oder Gold Darüber hinaus wird dort darauf hingewiesen, dass die Herstellung der entsprechenden Auflicht-Phasengitter auch mittels Elektronenstrahllithografie erfolgen kann.

Schließlich werden in der EP 773 458 A1 der Anmelderin in Verbindung mit den bekannten Fotolithografte-Methoden die Verwendung von Gold, Silber, Kupfer oder Aluminium als Materialen für die Reflexionsschichten erwähnt.

Aufgrund der fortwährend steigenden Anforderung an die Auflösung, beziehungsweise Messgenauigkeit solcher als Auflicht-Phasengitter ausgebildeten Maßstäbe ist es erforderlich geworden, die periodischen Teilungen oder Strukturen dieser Auflicht-Phasengitter weiter zu reduzieren. Durch Positionsmesseinrichtungen mit Aufllcht-Phasengittem mit geeignet fein strukturierten Teilungen können in bestimmten technischen Bereichen sogar aufwändige Laserstrahl-Interferometer ersetzt werden.

Den Fotolithografie-Methoden bezüglich der Feinheit der herzustellenden Strukturen sind physikalische Grenzen gesetzt. Ursache hierfür sind Beugungseffekte während der Belichtung des Fotolackes.

Durch das Elektronenstrahllithografie-Verfahren werden diese unerwünschten Beugungseffekte bei der Herstellung solcher als Aufiicht-Phasengitter ausgebildeten Maßstäbe zwar minimiert, es kann jedoch mit den gängigen Materialien für die Reflexionsschichten, etwa mit Gold, keine zufriedenstellend feine und scharfe Teilung hergestellt werden.

Der Erfindung liegt die Aufgabe zugrunde, ein Verfahren zur Herstellung eines Maßstabes in Form eines Auflicht-Phasengitters mit überaus feiner Teilung anzugeben, das gute optische Eigenschaften aufweist.

Diese Aufgabe wird erfindungsgemäß durch die Merkmale des Anspruches 1 gelöst.

Weiterhin soll ein Maßstab angegeben werden, dessen Eigenschaften und Merkmale im Anspruch 4 genannt sind.

Eine Positionsmesseinrichtung mit einem derartigen Maßstab ist im Anspruch 8 angegeben.

Die mit der Erfindung erzielten Vorteile bestehen insbesondere darin, dass nun auch Auflicht-Phasengitter erzeugt werden können, die eine überaus feine Teilung aufweisen, und gleichzeitig eine hohe Beugungseffizienz, beziehungsweise einen hohen Reflexionsgrad haben.

Vorteilhafte Ausbildungen der Erfindung entnimmt man den abhängigen Ansprüchen.

Durch die Anwendung der Elektronenstrahllithografie bei der Herstellung der Auflicht-Phasengitter in Verbindung mit einer geeigneten Ausführung einer Bottom-Reflektor-Schicht, können die neuartigen hochauflösenden Auflicht-Phasengitter hergestellt werden. Ein wichtiger Punkt für die Herstellung der Auflicht-Phasengitter ist die Materialauswahl der Bottom-Reflektor-Schicht. Bisher wurde immer nur darauf geachtet, dass diese Materialen einen guten Reflexionsgrad haben und gegebenenfalls auch eine geeignete Härte und gute Haftungseigenschaften aufweisen.

Der Reflexionsgrad drückt das Verhältnis von reflektierter Lichtenergie zu der auf der Reflektionsschicht auftreffendem Lichtenergie aus. Der Reflexionsgrad kann also folglich maximal den Wert 1 beziehungsweise 100% erreichen. Er wird im folgenden bei einer Lichtwellenlänge aus dem Bereich zwischen 250 nm und 1600 nm, beispielsweise 670 nm angegeben. Der Einfallswinkel des Lichtes beträgt für die Bestimmung des Reflexionsgrades 0°, er ist also senkrecht beziehungsweise orthogonal zur Reflektorebene.

Wegen der oben genannten Anforderungen an die Reflektorschichten wurde bislang überwiegend Gold als Material für die Bottom-Reflektor-Schicht verwendet. Bei der Verwendung von Gold, aber auch Chrom, als Bottom-Reflektor-Schicht in Verbindung mit der Elektronenstrahllithographie stößt man aber an Grenzen bezüglich der Feinheit der herstellbaren Teilungen. Ursache hierfür sind zurückgestreute Elektronen, welche den Fotolack bei der Strukturierung von der Rückseite her belichten, so dass die Qualität der so hergestellten feinen Teilung nicht ausreichend ist. Unter anderem durch die Auswahl von Materialien mit geeigneten Rückstreukoeffizienten ist jedoch die Herstellung von Auflicht-Phasengittern mit Teilungen kleiner als 3 $\mu$m möglich.

Unter Rückstreukoeffizient ist das Verhältnis von rückgestreuten zu primären Elektronen zu verstehen, wenn die Elektronen auf einen Festkörper, in diesem Fall auf das herzustellende Auflicht-Phasengitter, treffen. Die Messung des Rückstreukoeffizienten einer Schicht aus einem bestimmten Material mit gegebener Dicke wird bei einem Einfallswinkel senkrecht zur Probenoberfläche vorgenommen, und zwar bei einer Beschleunigungsspannung von 20 kV. Die Elektronen werden vor deren Beschleunigung zum Beispiel durch Glühemission freigesetzt.

Für die Herstellung eines tauglichen Auflicht-Phasengitters mit einer sehr feinen Teilung muss also die Bottom-Reflektor-Schicht sowohl geeignete Reflexionseigenschaften im Betrieb der Positionsmesseinrichtung aufweisen, als auch einen niedrigen Rückstreukoeffizienten für die Herstellung mittels Elektronenstrahllithografie.

Weitere Einzelheiten und Vorteile des erfindungsgemäßen Verfahrens sowie des erfindungsgemäßen Auflicht-Phasengitters und einer entsprechenden Positionsmesseinrichtung ergeben sich aus der nachfolgenden Beschreibung eines Ausführungsbeispieles anhand der beiliegenden Figuren.

Es zeigen die

Figuren 1a bis 1d    Verfahrensschritte anhand von Querschnitten durch ein Auflicht-Phasengitter gemäß der Erfindung,

Figur 2             eine alternative Ausführungsform eines Auflicht-Phasengitters gemäß der Erfindung mit einer Schutzschicht,

Figur 3             eine alternative Ausführungsform eines Auflicht-Phasengitters gemäß der Erfindung mit einer Zusatzschicht.

Figur 4a und 4b     je eine Front- und Seitenansicht der erfindungsgemäßen Positionsmesseinrichtung,

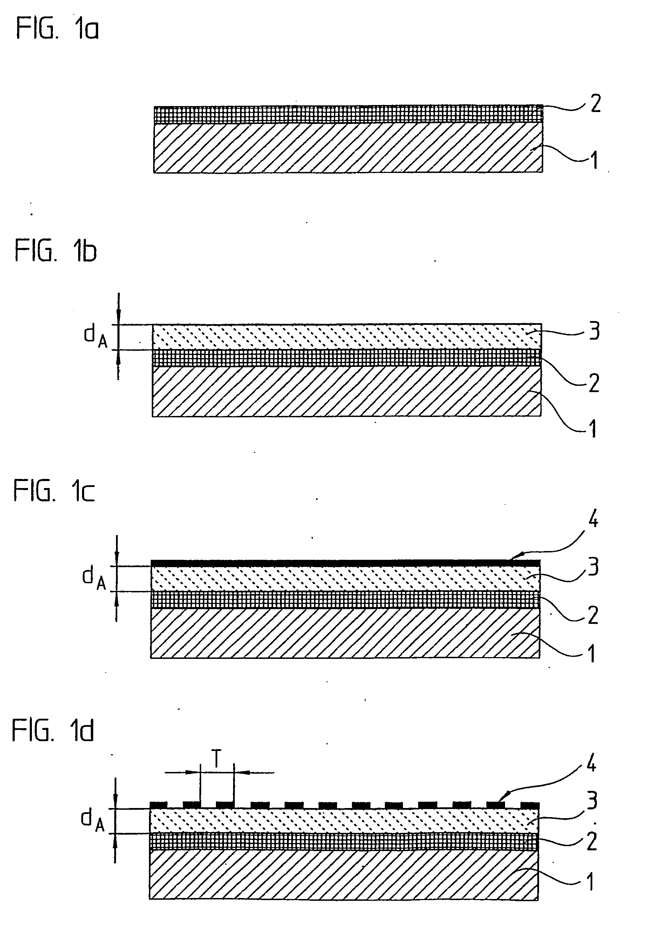

Gemäß der Figur 1a wird auf ein Trägersubstrat 1 aus gealtetem Zerodur zunächst eine 100 nm dicke Bottom-Reflektor-Schicht 2 im Vakuum durch Sputtern aufgebracht. Die Bottom-Reflektor-Schicht 2 wird ganzflächig, das heißt ohne periodische Unterbrechungen im Bereich ihrer im Betrieb beleuchtbaren Fläche aufgetragen.

Das Material für das Trägersubstrat 1 ist so gewählt, dass es eine möglichst große Stabilität, sowohl gegenüber mechanischen, als auch thermischen Belastungen aufweist. Insbesondere eignet sich hierzu wie oben erwähnt gealtetes Zerodur, dessen thermischer Ausdehnungskoeffizient nahezu Null ist. Als alternative Trägersubstratmaterialien kommen aber auch Quarzglas, andere optische Gläser, Stahl, wie etwa Invar sowie Keramik oder Silizium in Betracht. Die Stabilität im Hinblick auf mögliche temperaturbedingte Volumen- oder Längenänderungen ist vor allem beim Einsatz des erfindungsgemäßen Auflicht-Phasengitters in Positionsmesseinrichtungen zur hochpräzisen Erfassung der Relativlage zweier Objekte von Bedeutung.

Als Material für die Bottom-Reflektor-Schicht 2 wird Aluminium verwendet, das mit 2 % Chrom legiert ist, um dessen Schichthärte und Kratzbeständigkeit zu erhöhen. Die so ausgeführte Bottom-Reflektor-Schicht 2 weist einen Reflexionsgrad von 75 % auf, bei einem Rückstreukoeffizienten von 8 %. Demnach ergibt sich ein Verhältnis A von Reflexionsgrad R zu Rückstreukoeffizient $\eta$ von 9,38.

Sodann wird, wie in Figur 1b gezeigt, auf die Bottom-Reflektor-Schicht 2 eine 120 nm dicke Abstandsschicht 3 aufgetragen. Auch hier wird ein Sputter-Prozess angewendet. Im gezeigten Beispiel besteht die Abstandsschicht 3 aus $SiO_2$. Entscheidend für die Materialauswahl ist unter anderem, dass die Abstandsschicht 3 im späteren Betrieb des Auflicht-Phasengitters im wesentlichen transparent für die einfallende Strahlung ist. Durch die geeignete Wahl der Dicke $d_A$ der Abstandsschicht 3 lässt sich definiert die gewünschte resultierende Phasenverschiebung der reflektierten Teilstrahlenbündel einstellen. Die Optimierung der Schichtdicke $d_A$ im Hinblick auf die jeweiligen Anforderungen erfolgt jeweils über geeignete numerische Verfahren.

Im darauffolgenden Schrift wird gemäß der Figur 1c eine 35 nm dicke zweite Reflexionsschicht 4 aus Chrom mit Hilfe des Sputterverfahrens auf die Abstandsschicht 3 aufgetragen. Üblicherweise wird hier nicht reines Chrom verwendet, sondern Chrom mit eingelagertem Stickstoff um die Schichtspannung zu reduzieren. Alternativ hierzu können hier auch andere Materialen, wie etwa Nickel, Aluminium, Kupfer, Silber, etc. verwendet werden.

Gemäß Figur 1d wird danach die Strukturierung der zweiten Reflexionsschicht 4 derart vorgenommen, dass eine periodische Teilung mit einem Teilungsmaß T von 2048 nm entsteht. Nachdem die Teilung aus gleich breiten Strichen und Lücken besteht, liegt also hier eine Strichbreite von jeweils 1024 nm vor. Für die Strukturierung wird der bekannte Elektronenstrahllithografieprozess durchgeführt, dabei wird eine Beschleunigungsspannung von 20 kV, in Verbindung mit einer Glühemission, angelegt. Durch das Aluminium mit seiner hohen elektrischen Leitfähigkeit als Material für die Bottom-Reflektor-Schicht 2 werden Ladungen, die durch den Elektronenbeschuss in den Schichten entstehen aus dem Schichtaufbau gut abtransportiert. Dieser Effekt erweist sich als vorteilhaft für den Verlauf des Strukturierungsprozesses, weil sich im Schichtaufbau keine nennenswerten Ladungswolken aufbauen können. Dadurch kann die Strukturiergeschwindigeit sehr hoch gewählt werden und der Prozess führt letztlich auch zu einer scharfkantigen Strukturierung des Fotolackes.

Es zeigt sich, dass durch die Elektronenstrahllithografie in Kombination mit einer ausreichend dicken Bottom-Reflektor-Schicht 2, die im wesentlichen aus Aluminium besteht, die Herstellung von überaus guten Auflicht-Phasengitter-Maßstäben möglich ist. Die Qualität drückt sich sowohl in der Teilungsgüte, als auch im Reflexionsverhalten beziehungsweise der Beugungseffizienz des Maßstabes aus.

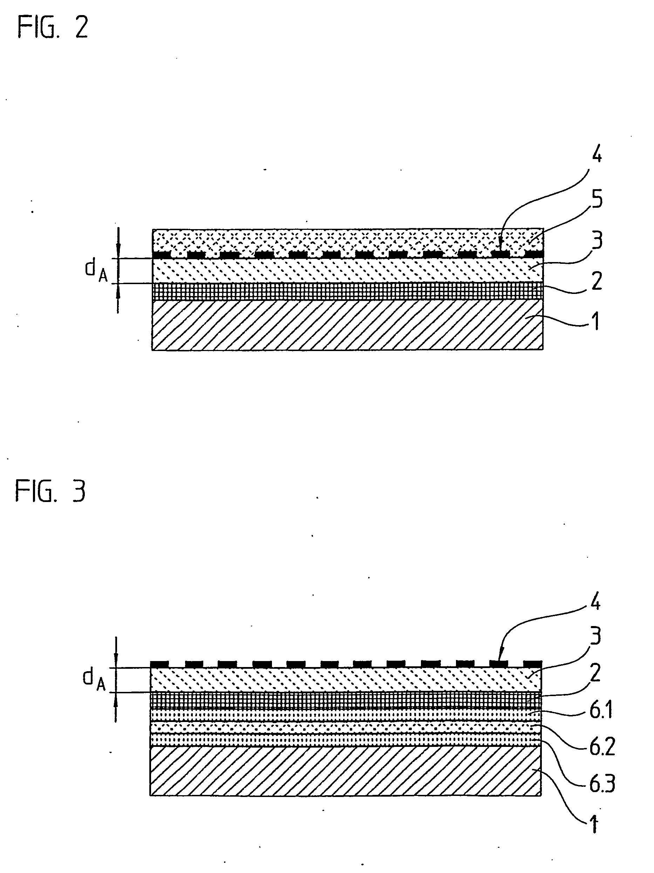

In der Figur 2 ist eine weitere Ausführungsvariante des erfindungsgemäßen Verfahrens, beziehungsweise des erfindungsgemäßen Auflicht-Phasengitters gezeigt. Es wird hier eine transparente Schutzschicht 5 als eine sogenannte Sol-Gel-Schicht ausgeführt. Alternativ hierzu kann die Schutzschicht 5 auch eine Spin-On-Glas-Schicht sein. Die Schutzschicht 5 hat im Wesentlichen die Aufgabe, die zweite Reflexionsschicht 4 gegenüber äußeren Einwirkungen, zum Beispiel mechanischen oder chemischen Ursprungs, zu schützen.

Eine weitere vorteilhafte Ausführungsvariante ist in der Figur 3 gezeigt. Hier wird auf das Trägersubstrat 1 durch Sputtern eine Zusatzschicht 6 aufgetragen, auf die danach die Bottom-Reflektor-Schicht 2 durch einen weiteren Sputter-Prozess aufgebracht wird. Die Zusatzschicht 6 besteht aus drei Einzelschichten 6.1, 6.2, 6.3. Die erste und die dritte Zusatzschicht 6.1 und 6.3 bestehen aus $SiO_2$, dagegen ist die zweite Zusatzschicht 6.2 aus Aluminium. Die Zusatzschicht 6 reduziert zum einen zusätzlich die zurückgestreuten Elektronen im späteren Elektronenstrahllithografieprozess und verringert überdies die Biegespannungen im fertigen Maßstab. Im Hinblick auf die Reduzierung der zurückgestreuten Elektronen ist es wichtig, dass die verwendeten Materialien in der Zusatzschicht 6 eine vergleichsweise geringe mittlere Kernladungszahl aufweisen und eine relativ niedrige Dichte. Unter mittlerer Kernladungszahl ist der Mittelwert der Kernladungszahlen der jeweiligen Atome eines Stoffes oder Stoffgemisches, gewichtet entsprechend ihres Anteils im Gesamtmaterial, zu verstehen. Die Zusatzschicht 6 muss nicht mehrlagig sein, sondern kann auch als eine Lage ausgeführt sein. Neben den oben genannten Materialien kann die Zusatzschicht 6 auch beispielsweise aus Diamant oder Diamon-Like-Coatings bestehen.

Darüber hinaus ist durch die Erfindung auch ein Maßstabsaufbau abgedeckt, bei dem ganz auf ein Trägersubstrat 1 verzichtet wird. Beispielsweise kann die Bottom-Reflektor-Schicht 2 so dick ausgestaltet sein, dass diese auch als Trägerkörper dient. Die Bottom-Reflektor-Schicht 2 würde dann ggf. aus einem polierten Aluminium-Streifen bestehen.

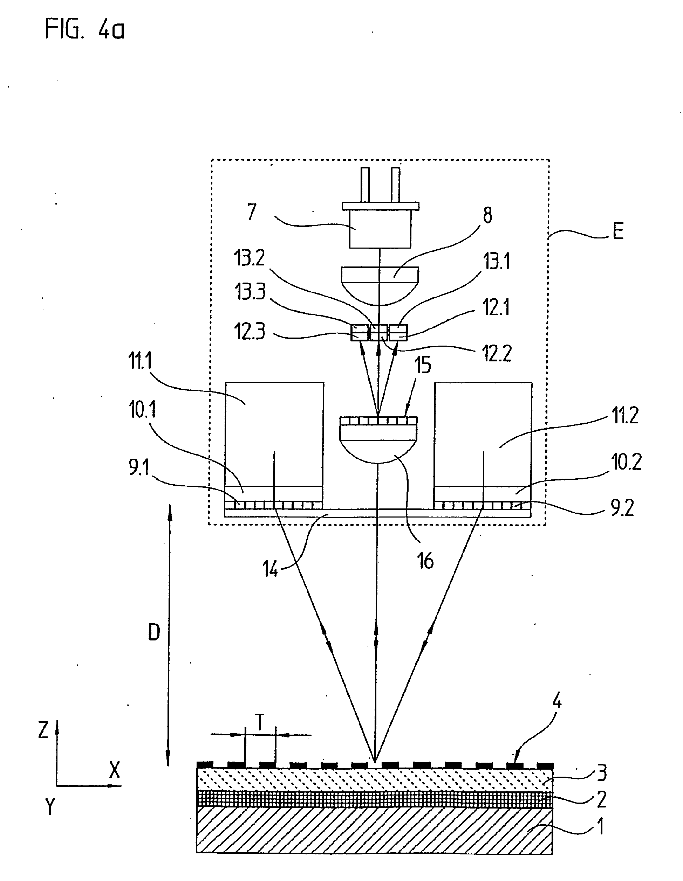

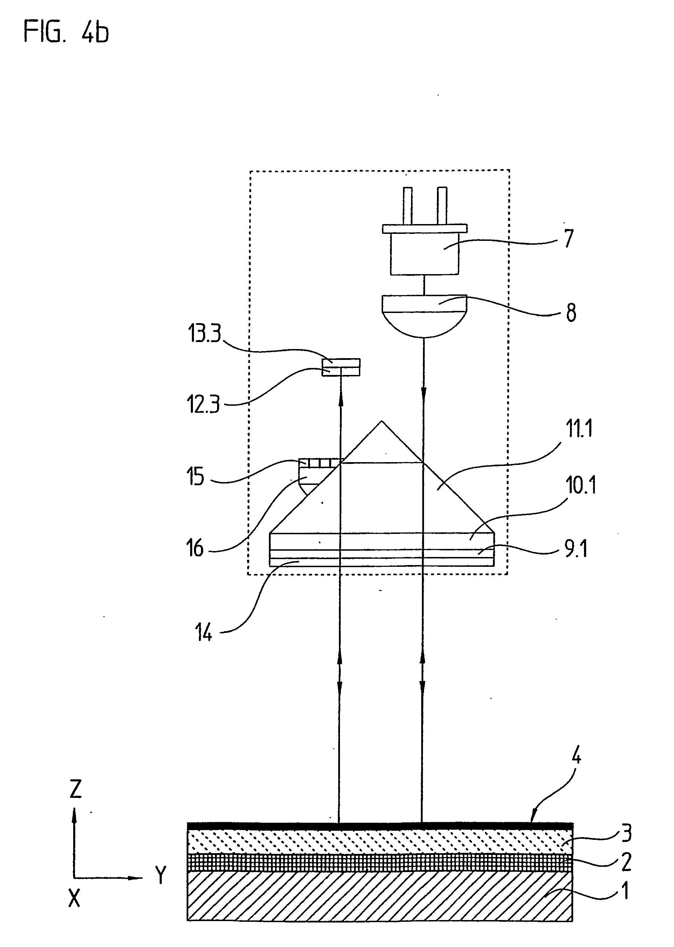

In der Figur 4 sind schematisch wesentliche Elemente einer Positionsmesseinrichtung mit dem oben beschriebenen Maßstab und einem 4-Gitter-Geber in Front- und Seitenansicht dargestellt. In diesem Zusammenhang sei auch auf den Offenbarungsgehalt der Anmeldung PCT/EP01/10373 der Anmelderin verwiesen. Die Beleuchtung erfolgt z. B. über eine als Laserdiode ausgebildete Lichtquelle 7 bei $\lambda$ = 780 nm mit nachfolgender Kollimationsoptik 8.

Für derartige Positionsmesseinrichtungen ist man aber nicht auf diese Wellenlänge festgelegt. Mit Vorteil eigenen sich für diesen Einsatz Lichtquellen 7, die Licht mit einer Wellenlänge aus dem Bereich von 250 nm bis 1600 nm aussenden. Die Optik der Abtasteinheit E besteht aus den Abtastgittern 9.1, 9.2, den $\lambda/8$-Plättchen 10:1, 10.2, den Dachkantprismen 11.1, 11.2 aus Glas, sowie Polarisatoren 12.1, 12.2, 12.3 und Fotoelementen 13.1, 13.2, 13.3 zur Signalgewinnung.

Der Maßstab in Form eines Auflicht-Phasengitters weist ein Teilungsmaß T von 2048 nm auf. Im Abstand D = 15mm vom Maßstab befinden sich zwei Dachkantprismen 11.1, 11.2, jeweils ausgebildet als 90°-Prismen, an deren Unterseiten, d. h. an den Seiten, die dem Maßstab zugewandt sind, Abtastgitter 9.1, 9.2 in Form von Transmissionsgittern mit Phasenteilung, mit dem gleichen Teilungsmaß von 2048 nm angebracht sind. Die beiden Dachkantprismen 11.1, 11.2 und Abtastgitter 9.1, 9.2 können z. B. auf einer gemeinsamen Trägerplatte 14 befestigt werden. Im vorliegenden Ausführungsbeispiel sind die beiden Dachkantprismen 11.1, 11.2 in Messrichtung x beabstandet voneinander angeordnet.

Alternativ zum erläuterten Ausführungsbeispiel kann auch ein einzelnes Dachkantprisma 11.1, 11.2 mit Abtastgitter 9.1, 9.2 mit Bohrungen oder Aussparungen zur Strahlein- und -auskopplung verwendet werden. Die Kombination aus Dachkantprisma 11.1, 11.2 und Abtastgittern 9.1, 9.2 wird nachfolgend auch als Umlenkelement bezeichnet.

Trifft ein von der Lichtquelle 7 emittiertes, kollimiertes Lichtbündel senkrecht und mittig zwischen der Anordnung der Dachkantprismen 11.1, 11.2 auf den Maßstab, so entstehen zwei +/- erste Beugungsordnungen, die nach der ersten Reflexion zurück auf die Unterseite der Dachkant-Prismen 11.1, 11.2 gelenkt werden. Durch Beugung an den Abtastgittern 9.1, 9.2 werden die Strahlenbündel vor dem Eintritt in die Dachkant-Prismen 11.1, 11.2 und dem nachfolgenden Durchlauf derselben gerade, d. h. senkrecht zum Maßstab, gerichtet. Die Dachkant-Prismen 11.1, 11.2 lenken die Teilstrahlen in z- und y-Richtung um und erzeugen dadurch einen Ortsversatz in y-Richtung. Beim Durchgang der Strahlenbündel durch die Umlenkelemente werden neben den Abtastgittern 9.1, 9.2 auch die $\lambda/8$-Plättchen 10.1, 10.2 je zweimal durchlaufen. Aufgrund der Orientierung des mindestens einen Dachkantprismas 11.1, 11.2 parallel zur Messrichtung x wirkt das Dachkantprisma 11.1, 11.2 in der y-Richtung als Retro-Reflektor. Diese Richtung y ist in der Ebene des Maßstabes senkrecht zur Messrichtung x ausgerichtet. Nach dem Austritt aus den Dachkant-Prismen 11.1, 11.2 werden durch wiederholte Beugung am Abtastgitter 9.1, 9:2 Strahlenbündel erzeugt, die zurück zum Maßstab propagieren und sich dort überlagern. Das interferierende Strahlenbündel wird durch die zweite Reflexion bzw. Beugung am Maßstab in z-Richtung, d.h. in Richtung der Detektorelemente, zurückgelenkt und trifft auf eine Anordnung aus Kollimatorlinse 16 und Aufspaltgitter 15. Am Aufspaltgitter 15 entstehen drei Teilstrahlenbündel. Die Signalgewinnung aus diesen drei Strahlenbündeln erfolgt in bekannter Art über die Polarisatoren 12.1, 12.2, 12.3 welche die Teilstrahlenbündel durchlaufen, bevor sie auf die Fotoelemente 13.1, 13.2, 13.3 auftreffen, an denen dann phasenverschobene Signale resultieren. In Verbindung mit dem Aufspaltgitter 15 sei auf die EP 481 356 B1 der Anmelderin verwiesen.

**Patentansprüche**

1. Verfahren zur Herstellung eines Maßstabes für eine lichtelektrische Positionsmesseinrichtung In Form eines Auflicht-Phasengitters, mit zwei voneinander beabstandeten Reflexionsschichten (2, 4), die zu beiden Seiten einer transparenten Abstandsschicht (3) angeordnet sind, mit folgenden Verfahrensschritten:

   - Auftragen einer ersten Reflexionsschicht (2) als eine ganzflächig durchgehende Schicht auf einer Schicht (1; 6) aus einem Material mit einer mittleren Kernladungszahl kleiner 30 und einer Dichte kleiner 5 kg/dm$^3$, wobei die erste Reflexionsschicht (2) zu über 80 Gew. % aus Aluminium besteht, und eine Beziehung

$$A = R/\eta \geq 3$$

   erfüllt, wobei

   R der energiebezogene Reflexionsgrad für Licht bei einer Wellenlänge aus dem Bereich von 250 nm bis 1600 nm und bei senkrechter Einstrahlung auf die erste Refiäxlonsschicht (2) ist und,
   η der Rückstreukoeffizient für Elektronen ist, welche nach deren Freisetzung mit einer Spannung von 20 kV beschleunigt werden und senkrecht auf die erste Reflexionsschicht (2) treffen,

   - Aufbringen der Abstandsschicht (3) auf die erste Reflexionsschicht (2),
   - Aufbringen der zweiten Reflexionsschicht (4), welche aus Nickel, Aluminium, Kupfer, Silber oder zu über 80 Gew. % aus Chrom besteht, auf die Abstandsschicht (3),
   - Strukturieren der zweiten Reflexionsschicht (4) durch einen Elektronenstrahllithografieprozess.

2. Verfahren gemäß Anspruch 1, wobei die erste Reflexionsschicht (2) mindestens eine Dicke von 35 nm aufweist.

3. Verfahren gemäß einem der vorhergehenden Ansprüche, wobei auf die zweite Reflexionsschicht (4) eine weitere lichtdurchlässige Schicht (5) aufgebracht wird.

4. Maßstab für eine lichtelektrische Positionsmesseinnchtung in Form eines Auflicht-Phasengitters mit zwei voneinander beabstandeten Reflexionsschichten (2, 4), die zu beiden Seiten einer transparenten Abstandsschicht (3) angeordnet sind, wobei
   die erste Reflexionsschicht (2) des Maßstabes als eine ganzflächig durchgehende Schicht auf einer Schicht (1;6) aus einem Material mit einer mittleren Kemiadungszahl kleiner 30 und einer Dichte kleiner 5 kg/dm$^3$ ausgebildet ist, und die erste Reflexionsschicht (2) zu über 80 Gew. % aus Aluminium besteht, und die Beziehung

$$A = R/\eta \geq 3$$

   erfüllt, wobei

   R der energiebezogene Reflexionsgrad für Licht bei einer Wellenlänge aus dem Bereich von 250 nm bis 1600 nm und bei senkrechter Einstrahlung auf die erste Reflexionsschicht (2) ist und,
   η der Rückstreukoeffzient für Elektronen, welche nach deren Freisetzung mit einer Spannung von 20 kV beschleunigt werden und senkrecht auf die erste Reflexionsschicht (2) treffen, und

   die auf der Abstandsschicht (3) aufgetragene zweite Reflexionsschicht (4) aus Nickel, Aluminium, Kupfer, Silber oder zu über 80 Gew. % aus Chrom besteht, wobei die zweite Reflexionsschicht (4) durch einen Elektronenstrahllithografieprozess strukturiert ist.

**5.** Maßstab gemäß Anspruch 4, wobei die strukturierte zweite Reflexionsschicht (4) eine periodische Struktur mit einem Teilungsmaß (T) von weniger als 3 $\mu$m aufweist.

**6.** Maßstab gemäß einem der Ansprüche 4 oder 5, wobei die zweite Reflexionsschicht (4) aus Chrom besteht.

**7.** Maßstab gemäß einem der Ansprüche 4 bis 6, wobei die erste Reflexionsschicht (2) mindestens eine Dicke von 35 nm aufweist.

**8.** Positionsmesseinrichtung mit einer Lichtquelle (7) und einem Maßstab, in Form eines Auflicht-Phasengitters, mit zwei voneinander beabstandeten Reflexionsschichten (2, 4), die zu beiden Seiten einer transparenten Abstandsschicht (3) angeordnet sind, wobei

- die Lichtquelle (7) den Maßstab beleuchtet,
- die erste Reflexionsschicht (2) des Maßstabes als eine ganzflächig durchgehende Schicht auf einer Schicht (1; 6) aus einem Material mit einer mittleren Kernladungszahl kleiner 30 und einer Dichte kleiner 5 kg/dm$^3$ ausgebildet ist, und die erste Reflexionsschicht (2) zu über 80 Gew. % aus Aluminium besteht, und die Beziehung

$$A = R/\eta \geq 3$$

erfüllt, wobei

R der energiebezogene Reflexionsgrad der ersten Reflexionsschicht (2) für Licht aus der Lichtquelle (7) ist, und
$\eta$ der Rückstreukoeffizient für Elektronen, welche nach deren Freisetzung mit einer Spannung von 20 kV beschleunigt werden und senkrecht auf die erste Reflexionsschicht (2) treffen, und

die auf der Abstandsschicht (3) aufgetragene zweite Reflexionsschicht (4) aus Nickel, Aluminium, Kupfer, Silber oder zu über 80 Gew. % aus Chrom besteht, wobei die zweite Reflexionsschicht (4) durch einen Elektronenstrahllithografieprozess strukturiert ist.

**Claims**

**1.** Method for producing a scale for a photoelectric position measuring device in the form of an incident-light phase grid with two reflection layers (2, 4) spaced apart from one another which are arranged on both sides of a transparent spacing layer (3), having the following method steps:

- applying a first reflection layer (2) as an all over continuous layer on a layer (1; 6) made from a material with an average atomic number smaller than 30 and a density smaller than 5 kg/dm$^3$, wherein the first reflection layer (2) consists of more than 80% by weight of aluminium and fulfils a relationship

$$A = R/\eta \geq 3$$

wherein

R is the reflectance for light at a wavelength from the range 250 to 1600 nm and with vertical irradiation onto the first reflection layer (2) and,
$\eta$ is the backscatter coefficient for electrons which are accelerated after their release with a voltage of 20 kV and impinge vertically onto the first reflection layer (2),

- applying the spacing layer (3) onto the first reflection layer (2),
- applying the second reflection layer (4), which consists of nickel, aluminium, copper, silver or more than 80% by weight of chromium, to the spacing layer (3),
- structuring the second reflection layer (4) by means of an electron beam lithography process.

2. Method according to Claim 1, wherein the first reflection layer (2) at least has a thickness of 35 nm.

3. Method according to one of the preceding claims, wherein a further light-permeable layer (5) is applied to the second reflection layer (4).

4. Scale for a photoelectric position measuring device in the form of an incident-light phase grid with two reflection layers (2, 4) spaced apart from one another which are arranged on both sides of a transparent spacing layer (3), wherein
the first reflection layer (2) of the scale is configured as an all over continuous layer on a layer (1; 6) made from a material with an average atomic number smaller than 30 and a density smaller than 5 kg/dm$^3$, and the first reflection layer (2) consists of more than 80% by weight of aluminium and fulfils the relationship

$$A = R/\eta \geq 3$$

wherein

R is the reflectance in terms of energy for light at a wavelength from the range 250 to 1600 nm and with vertical irradiation onto the first reflection layer (2) and,
$\eta$ is the backscatter coefficient for electrons which are accelerated after their release with a voltage of 20 kV and impinge vertically onto the first reflection layer (2), and

the second reflection layer (4) applied to the spacing layer (3) consists of nickel, aluminium, copper, silver or more than 80% by weight of chromium, wherein the second reflection layer (4) is structured by means of an electron beam lithography process.

5. Scale according to Claim 4, wherein the structured second reflection layer (4) has a periodic structure with a division (T) of less than 3 $\mu$m.

6. Scale according to one of Claims 4 or 5, wherein the second reflection layer (4) consists of chromium.

7. Scale according to one of Claims 4 to 6, wherein the first reflection layer (2) at least has a thickness of 35 nm.

8. Position measuring device with a light source (7) and a scale in the form of an incident-light phase grid with two reflection layers (2, 4) spaced apart from one another which are arranged on both sides of a transparent spacing layer (3), wherein

- the light source (7) illuminates the scale,
- the first reflection layer (2) of the scale is configured as an all over continuous layer on a layer (1; 6) made from a material with an average atomic number smaller than 30 and a density smaller than 5 kg/dm$^3$, and the first reflection layer (2) consists of more than 80% by weight of aluminium and fulfils the relationship

$$A = R/\eta \geq 3$$

wherein

R is the reflectance in terms of energy of the first reflection layer (2) for light from the light source (7), and
$\eta$ is the backscatter coefficient for electrons which are accelerated after their release with a voltage of 20 kV and impinge vertically onto the first reflection layer (2), and

the second reflection layer (4) applied to the spacing layer (3) consists of nickel, aluminium, copper, silver or more than 80% by weight of chromium, wherein the second reflection layer (4) is structured by means of an electron beam lithography process.

**Revendications**

1. Procédé pour l'élaboration d'une échelle pour un dispositif de mesure de position photoélectrique sous la forme d'un réseau de phase à lumière incidente, comprenant deux couches de réflexion (2, 4) espacées l'une de l'autre, qui sont disposées des deux côtés d'une couche d'espacement (3) transparente, comprenant les étapes de procédé suivantes :

   - application d'une première couche de réflexion (2) sous la forme d'une couche continue sur toute la surface sur une couche (1 ; 6) à base d'un matériau présentant un numéro atomique moyen inférieur à 30 et une densité inférieure à 5 kg/dm$^3$, la première couche de réflexion (2) étant constituée d'aluminium pour plus de 80 % en poids, et répondant à la relation

$$A = R/\eta \geq 3,$$

   R étant le degré de réflexion spécifique à l'énergie pour la lumière pour une longueur d'onde provenant de la plage de 250 nm à 1 600 nm et dans le cas d'une incidence perpendiculaire sur la première couche de réflexion (2) et
   $\eta$ étant le coefficient de rétrodiffusion pour des électrons qui sont accélérés après leur libération avec une tension de 20 kV et arrivent perpendiculairement sur la première couche de réflexion (2),

   - application de la couche d'espacement (3) sur la première couche de réflexion (2),
   - application de la seconde couche de réflexion (4), qui est à base de nickel, aluminium, cuivre, argent ou pour plus de 80 % en poids à base de chrome, sur la couche d'espacement (3),
   - structuration de la seconde couche de réflexion (4) par un processus de lithographie à faisceau électronique.

2. Procédé selon la revendication 1, la première couche de réflexion (2) présentant au moins une épaisseur de 35 nm.

3. Procédé selon l'une quelconque des revendications précédentes, une autre couche (5) transparente étant appliquée sur la seconde couche de réflexion (4).

4. Echelle pour un dispositif de mesure de position photoélectrique sous la forme d'un réseau de phase en lumière incidente avec deux couches de réflexion (2, 4) espacées l'une de l'autre, qui sont disposées des deux côtés d'une couche d'espacement (3) transparente,
   la première couche de réflexion (2) de l'échelle étant conçue sous la forme d'une couche continue sur toute la surface sur une couche (1 ; 6) à base d'un matériau présentant un numéro atomique moyen inférieur à 30 et une densité inférieure à 5 kg/dm$^3$, et la première couche de réflexion (2) étant constituée pour plus de 80 % en poids d'aluminium, et répondant à la relation suivante :

$$A = R/\eta \geq 3,$$

   R étant le degré de réflexion spécifique à l'énergie pour la lumière avec une longueur d'onde provenant de la plage de 250 nm à 1 600 nm et dans le cas d'une incidence perpendiculaire sur la première couche de réflexion (2) et
   $\eta$ étant le coefficient de rétrodiffusion pour des électrons qui sont accélérés après leur libération avec une tension de 20 kV et arrivent perpendiculairement sur la première couche de réflexion (2), et

   la seconde couche de réflexion (4) appliquée sur la couche d'espacement (3) étant à base de nickel, aluminium, cuivre, argent ou pour plus de 80 % en poids à base de chrome, la seconde couche de réflexion (4) étant structurée par un processus de lithographie à faisceau électronique.

5. Echelle selon la revendication 4, la seconde couche de réflexion (4) structurée présentant une structure périodique avec une cote de division (T) inférieure à 3 $\mu$m.

**6.** Echelle selon l'une quelconque des revendications 4 ou 5, la seconde couche de réflexion (4) étant à base de chrome.

**7.** Echelle selon l'une quelconque des revendications 4 à 6, la première couche de réflexion (2) présentant au moins une épaisseur de 35 nm.

**8.** Dispositif de mesure de position comprenant une source lumineuse (7) et une échelle, sous la forme d'un réseau de phase en lumière incidente, avec deux couches de réflexion (2, 4) espacées l'une de l'autre, qui sont disposées des deux côtés d'une couche d'espacement (3) transparente,

- la source lumineuse (7) éclairant l'échelle,
- la première couche de réflexion (2) de l'échelle étant conçue sous la forme d'une couche continue sur toute la surface sur une couche (1 ; 6) à base d'un matériau avec un numéro atomique moyen inférieur à 30 et une densité inférieure à 5 kg/dm$^3$, et la première couche de réflexion (2) étant pour plus de 80 % en poids à base d'aluminium, et répondant à la relation suivante :

$$A = R/\eta \geq 3,$$

R étant le degré de réflexion spécifique à l'énergie de la première couche de réflexion (2) pour la lumière provenant de la source lumineuse (7), et
η étant le coefficient de rétrodiffusion pour des électrons qui sont accélérés après leur libération avec une tension de 20 kV et arrivent perpendiculairement sur la première couche de réflexion (2), et

la seconde couche de réflexion (4) appliquée sur la couche d'espacement (3) étant à base de nickel, d'aluminium, de cuivre, d'argent ou pour plus de 80 % en poids à base de chrome, la seconde couche de réflexion (4) étant structurée par un processus de lithographie à faisceau électronique.

FIG. 1a

FIG. 1b

$d_A$

FIG. 1c

$d_A$

FIG. 1d

T

$d_A$

FIG. 2

FIG. 3

FIG. 4a

FIG. 4b

**IN DER BESCHREIBUNG AUFGEFÜHRTE DOKUMENTE**

**In der Beschreibung aufgeführte Patentdokumente**

- EP 0160784 A2
- EP 0742455 A1
- EP 773458 A1
- EP 0110373 W
- EP 481356 B1